# EUROPÄISCHE PATENTSCHRIFT

(11) **EP 3 483 048 B1**
(45) Veröffentlichungstag und Bekanntmachung des Hinweises auf die Patenterteilung: **12.07.2023**
(21) Anmeldenummer: 18201666.7
(22) Anmeldetag: 22.10.2018
(51) Int. Cl.: B62D 55/112

(54) **RAUPENLAUFWERK FÜR EINE LANDWIRTSCHAFTLICHE ARBEITSMASCHINE**
CATERPILLAR TRACK FOR AN AGRICULTURAL MACHINE
MÉCANISME DE DÉPLACEMENT SUR CHENILLE POUR UN ENGIN AGRICOLE

(30) Priorität: 08.11.2017 DE 102017126103
(43) Veröffentlichungstag der Anmeldung: 15.05.2019
(73) Patentinhaber: CLAAS Industrietechnik GmbH, 33106 Paderborn (DE)
(72) Erfinder: Obermeier-Hartmann, Robert, 33014 Bad Driburg (Pömbsen) (DE); Rackow, Sascha, 33098 Paderborn (DE)
(74) Vertreter: CLAAS Gruppe

(56) Entgegenhaltungen:
- WO-A1-2011/154533
- DE-B1- 2 255 348
- GB-A- 2 301 569
- US-A- 3 602 470
- US-A1- 2008 084 111

## Beschreibung

Die Erfindung betrifft ein Raupenlaufwerk einer landwirtschaftlichen Arbeitsmaschine dem Oberbegriff des Anspruches 1, sowie eine landwirtschaftliche Arbeitsmaschine gemäß Anspruch 11.

Landwirtschaftliche Arbeitsmaschinen wie Traktoren oder selbstfahrende Erntemaschinen werden zunehmend größer und leistungsstärker konstruiert, um eine effizientere Bearbeitung von landwirtschaftlichen Flächen zu ermöglichen. Dabei steigt mit dem Eigengewicht der Arbeitsmaschinen auch das zulässige Gesamtgewicht an, welches auf dem Boden abgestützt werden muss. Ein hohes Gesamtgewicht ermöglicht dabei oftmals auch eine hohe Ballastierung der landwirtschaftlichen Arbeitsmaschine, welche je nach durchzuführenden Arbeiten variabel an der Arbeitsmaschine angeordnet sein kann, beispielsweise um eine Verlagerung des Schwerpunktes der Arbeitsmaschine zu beeinflussen. Um hierbei eine nachteilige Bodenverdichtung möglichst zu vermeiden, muss die Aufstandsfläche am Boden vergrößert werden, wobei bei luftgefüllten Rädern mit zunehmender Aufstandsfläche auch der Durchmesser der Räder ansteigt, wodurch wiederum der für die Räder benötigte Bauraum ansteigt.

Um eine Vergrößerung der Aufstandsfläche ohne diese Nachteile zu erreichen, werden zunehmend Fahrzeuge mit Raupenlaufwerken eingesetzt, die eine größere Aufstandsfläche aufweisen und zudem eine verbesserte Zugkraft auf weichem Boden ermöglichen können. Dabei weisen die eingesetzten Laufwerke oftmals starr an einem Laufwerkswagen oder Chassis angeordnete Umlenkrollen und Tragrollen auf, damit die für das elastische Raupenband benötigten hohen Vorspannkräfte aufgebracht werden können. Nachteilig bei derartigen starren Lagerungen ist jedoch ein sehr eingeschränkter Fahrkomfort, besonders auf asphaltierten Straßen. Zudem kann es durch die starre Lagerung der Raupenlaufwerke auch zu Schwingungen des Fahrzeuges kommen, wodurch die Fahrsicherheit beeinträchtigt werden kann.

Ein Fahrwerk für landwirtschaftliche Maschinen mit elastischen Gurtbändern ist beispielsweise aus der WO 2011/154533 A1 bekannt, wobei ein Gurtbandlaufwerk jeweils mindestens zwei äußere Umlenkrollen sowie eine zwischen diesen und oberhalb der Umlenkrollen angeordnete Antriebsrolle, über deren Umfang ein Endlos-Gurtband abrollt, und mindestens eine unterhalb der Antriebsrolle befindliche, gefedert und/oder gedämpft aufgehängte Stützrolle zur Abstützung eines bodenseitigen Gurtbandabschnitts zwischen den beiden Umlenkrollen aufweist. Dabei sind die äußeren Umlenkrollen und die wenigstens eine Stützrolle einem schwenkbar angeordneten Laufwagen zugeordnet, der an einem Schwingrahmen angeordnet ist, welcher wiederum federnd mit einem Hauptrahmen des Landfahrzeugs verbunden ist. Die Aufhängungen der Stützrollen am Laufwagen und/oder Tragrahmen des Gurtbandlaufwerks und/oder des gemeinsamen Schwingrahmens sind jeweils unabhängig voneinander gefedert und/oder gedämpft, wobei der Tragrahmen über eine Momentenabstützung gegen ein rahmenfestes Bauteil des Fahrzeuges abgestützt ist. Diese aufwändig Ausgestaltete Art der Lagerung des Raupenlaufwerkes erfordert einen hohen Aufwand zur Abstimmung der einzelnen Feder- und/oder Dämpfungselemente, so dass eine Anpassung der Federung/ Dämpfung des Raupenlaufwerkes beispielsweise an veränderte Bodenbedingungen nur mit einem hohen Aufwand möglich ist. Ein weiteres Raupenlaufwerk ist aus der GB2301569A bekannt.

Es ist daher eine Aufgabe der Erfindung ein Raupenlaufwerk für eine landwirtschaftliche Arbeitsmaschine bereitzustellen, welches eine Verbesserung des Fahrkomforts und der Fahrsicherheit ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Raupenlaufwerk für eine landwirtschaftliche Arbeitsmaschine umfasst mindestens eine erste und eine zweite Umlenkrolle, wobei die erste Umlenkrolle an einem ersten Tragarm und die zweite Umlenkrolle an einem zweiten Tragarm gelagert ist, mindestens eine zwischen den Umlenkrollen angeordnete Stützrolle, und ein die Umlenkrollen und die mindestens eine Stützrolle umschlingendes Raupenband, wobei mindestens einer Umlenkrolle und/oder einer Stützrolle ein, insbesondere hydro-pneumatisches, Dämpfungselement zugeordnet ist. Gemäß der Erfindung ist mindestens eine, einem Dämpfungselement zugeordnete, geregelte Drosseleinrichtung vorgesehen, welche derart ausgebildet ist, dass deren Strömungswiderstand, insbesondere während des Betriebs des Raupenlaufwerkes, einstellbar ist.

Ein Antrieb des Raupenbandes erfolgt reibschlüssig und/oder formschlüssig über zumindest eine angetriebene Umlenkrolle. Ein Raupenband kann dabei ein elastisches Raupenband oder ein Kettenband sein, welches beispielsweise mittels einer Spanneinrichtung gespannt werden kann. Ein Dämpfungselement kann in Form eines hydraulischen, pneumatischen oder hydropneumatischen Zylinders ausgebildet sein. Mindestens einem Dämpfungselement des Raupenlaufwerkes kann eine geregelte Drosseleinrichtung zugeordnet sein, welche derart ausgestaltet ist, dass deren Strömungswiderstand veränderbar und/oder auf einen bestimmten Wert einstellbar ist. Eine Regelung oder Einstellung der Drosseleinrichtung kann besonders während des Betriebs der Arbeitsmaschine erfolgen, also bei Stillstand oder während der Bewegung des Raupenlaufwerkes. Dies ermöglicht eine Veränderung der Dämpfungswirkung des jeweiligen zugeordneten Dämpfungselementes, insbesondere während des Betriebs der Arbeitsmaschine, wodurch eine Anpassung der Dämpfung, beispielsweise von Aufbauschwingungen, des Raupenlaufwerkes an einen jeweiligen Fahrzustand, unterschiedliche Fahrzeuggeschwindigkeiten und/oder Beladungszustände mit geringem Aufwand möglich ist. Denkbar ist auch eine kontinuierliche, Einstellung der Dämpfung, wodurch ein Fahrkomfort und die Fahrsicherheit der landwirtschaftlichen Arbeitsmaschine weiter verbessert werden kann.

In einer bevorzugten Ausgestaltung der Erfindung ist mindestens einer Umlenkrolle ein erstes Dämpfungselement und der mindestens einen Stützrolle ein zweites Dämpfungselement zugeordnet, wobei das erste und zweite Dämpfungselement fluidisch gekoppelt sind. Durch die Koppelung des ersten und zweiten Dämpfungselementes kann eine verbesserte Federung des Raupenlaufwerkes besonders bei unebenem Boden erreicht werden. Vorteilhafterweise ist ein Druckspeicher für ein erstes Fluid vorgesehen, welcher mit mindestens einem, insbesondere dem ersten, Dämpfungselement fluidisch verbunden ist. Der Druckspeicher kann beispielsweise in Form eines Membranspeichers ausgebildet sein und insbesondere mit dem ersten Dämpfungselement verbunden sein.

In einer bevorzugten Ausgestaltung der Erfindung ist die geregelte Drosseleinrichtung zwischen dem ersten und dem zweiten Dämpfungselement, insbesondere in einer diese verbindende Verbindungsleitung, angeordnet. Hierdurch kann besonders eine Dämpfung des zweiten Dämpfungselementes, welches beispielsweise der mindestens einen Stützrolle zugeordnet sein kann, beeinflusst werden. Die Drosseleinrichtung kann dabei in einer ein Fluid führenden Verbindungsleitung angeordnet sein, wodurch eine bauraumoptimierte Anordnung der Drosseleinrichtung unabhängig von den Dämpfungselementen möglich ist. Denkbar ist auch eine Anordnung der Drosseleinrichtung unmittelbar an einem Dämpfungselement oder eine Integration der Drosseleinrichtung in ein Dämpfungselement. Dies hätte den Vorteil, dass die Montage durch die Drosseleinrichtung nicht aufwändiger würde und das, besonderes eine integrierte, Drosseleinrichtung besser gegen Umwelteinflüsse geschützt wäre.

Vorteilhafterweise ist die geregelte Drosseleinrichtung zwischen einem, insbesondere dem ersten, Dämpfungselement und dem Druckspeicher angeordnet. Das, insbesondere erste, Dämpfungselement kann dabei in Form eines Zylinders ausgebildet sein, dessen Kolben zwischen einer Ringkammer und einem Kolbenraum beweglich angeordnet ist, die jeweils mit, insbesondere demselben, Fluid gefüllt sind. Dabei kann der Druckspeicher fluiddurchlässig mit der Ringkammer des, insbesondere ersten, Dämpfungselementes verbunden sein. Durch die Anordnung der regelbaren Drosseleinrichtung zwischen dem Druckspeicher und dem ersten Dämpfungselement kann sich dessen Regelung auf alle nachgeordneten, insbesondere das erste und zweite, Dämpfungselemente auswirken.

Nach der Erfindung ist einer Drosseleinrichtung mindestens ein Rückschlagventil zugeordnet. Weiterhin kann einem Dämpfungselement mindestens ein Rückschlagventil zugeordnet sein. Das Rückschlagventil und die Drosseleinrichtung können dabei parallel angeordnet und zu einem Drosselrückschlagventil geschaltet sein. Dies ist eine Form eines variablen, richtungsabhängigen Strömungswiderstandes. Dieser bietet die Möglichkeit, die Bewegungsgeschwindigkeiten des Dämpfungselementes für beide Bewegungsrichtungen getrennt einzustellen, so dass je nach Bewegungsrichtung ein unterschiedliches Dämpfungsverhalten einstellbar ist. Dies hat den Vorteil, dass beispielsweise bei einem, insbesondere zweiten, Dämpfungselement der Stützrollen eine Aufwärtsbewegung - über die Drosseleinrichtung - stärker gedämpft wird, als eine Rückstellbewegung nach unten, bei der ein Fluid über das Rückschlagventil strömen kann. Dies hat den Vorteil einer schnelleren Rückstellung der Stützrollen nach Bodenunebenheit.

Nach der Erfindung ist ein, insbesondere voreingestellter, richtungsabhängiger Strömungswiderstand vorgesehen. Ein voreingestellter richtungsabhängiger Strömungswiderstand weist dabei einen fest voreingestellten, nicht regelbaren, Strömungswiderstand auf, der in beide Richtungen unterschiedlich stark ausgebildet sein kann. Der voreingestellte richtungsabhängige Strömungswiderstand kann mehrteilig ausgebildet sein. Der richtungsabhängige Strömungswiderstand kann dabei zwischen dem ersten und dem zweiten Dämpfungselement angeordnet sein. Der Strömungswiderstand kann dabei in ein Dämpfungselement integriert, oder in einer diese verbindenden Fluidleitungen angeordnet sein. Durch diesen, insbesondere voreingestellten, richtungsabhängigen Strömungswiderstand kann beispielsweise eine Grundeinstellung der Dämpfung zur Reduzierung von Schwingungen, besonders bei pulsierender Belastung, ermöglicht werden.

In einer weiteren vorteilhaften Ausgestaltung der Erfindung ist die geregelte Drosseleinrichtung in Form einer verstellbaren Blende und/oder eines Drosselventils mit einstellbarem Strömungsquerschnitt ausgestaltet. Weiterhin ist, je nach Auslegung der Dämpfungselemente, denkbar, dass die geregelte Drosseleinrichtung in Form einer Nadeldrossel, einer Drossel mit Längskerbe, einer Schlitzdrossel und/oder in Form einer Spaltdrossel ausgestaltet sind. Durch die Wahl einer entsprechend geeigneten geregelten Drosseleinrichtung kann eine zuverlässige Funktion der geregelten Drosselung sichergestellt werden.

Vorteilhaft ist weiterhin, dass eine Drosseleinrichtung, ein, insbesondere voreingestellter, richtungsabhängiger Strömungswiderstand und/oder ein Rückschlagventil in ein Dämpfungselement, insbesondere dessen Kolben, integriert ist. Eine Drosseleinrichtung, der, insbesondere voreingestellte, richtungsabhängige Strömungswiderstand oder das Rückschlagventil können beispielsweise in einen Dämpfungskolben oder in Form von beweglichen Platten, sogenannten Shims, in ein Dämpfungselement integriert werden. Dies hat den Vorteil, dass kein zusätzlicher Bauraum benötigt wird und das Umwelteinflüsse, welche zu einer Beschädigung der Drosseleinrichtung und/oder des Rückschlagventils führen können, besser abgeschirmt werden können.

In einer weiteren vorteilhaften Ausgestaltung der Erfindung ist eine Steuervorrichtung zum manuellen und/oder automatischen Einstellen mindestens einer geregelten Drosseleinrichtung, insbesondere während des Betriebs des Raupenlaufwerkes, vorgesehen. Dies ermöglicht eine, insbesondere kontinuierliche, Veränderung der Dämpfungswirkung des jeweiligen zugeordneten Dämpfungselementes, insbesondere während des Betriebs der Arbeitsmaschine, wodurch eine Anpassung der Dämpfung, beispielsweise von Aufbauschwingungen, des Raupenlaufwerkes an einen jeweiligen Fahrzustand, unterschiedliche Fahrzeuggeschwindigkeiten und/oder Beladungszustände mit geringem Aufwand möglich ist. Vorteilhafterweise ist dabei eine geregelte Drosseleinrichtung in Abhängigkeit mindestens eines Betriebsparameters steuer- und/oder regelbar. Betriebsparameter können dabei beispielsweise eine Geschwindigkeit der Arbeitsmaschine, eine Ballastierung und/oder Bodenverhältnisse wie Straße oder Feld sein.

Weiterhin betrifft die Erfindung eine landwirtschaftliche Arbeitsmaschine, insbesondere ein Traktor oder eine selbstfahrende Erntemaschine, mit mindestens einem wie vorstehend beschriebenen und ausgebildeten Raupenlaufwerk.

Nachfolgend wird die Erfindung unter Bezugnahme auf die anliegenden Zeichnungen näher erläutert.

Es zeigt:
- Fig. 1:: eine schematische Seitenansicht eines Triebrades eines Raupenlaufwerkes einer landwirtschaftlichen Arbeitsmaschine mit einem Gummiraupenband;
- Fig. 2:: eine schematische Darstellung eines ersten und zweiten Dämpfungselementes mit einer dazwischen angeordneten, geregelten Drosseleinrichtung;
- Fig. 3:: eine schematische Darstellung zweier Dämpfungselemente mit einem Drosselrückschlagventil zwischen dem ersten Dämpfungselement und dem Druckspeicher;
- Fig. 4:: eine schematische Darstellung der Dämpfungselemente in Fig. 3 mit einem zusätzlichen richtungsabhängigen Strömungswiderstand; und
- Fig. 5:: eine schematische Darstellung der Dämpfungselemente in Fig. 3 mit einem zusätzlichen Drosselrückschlagventil.

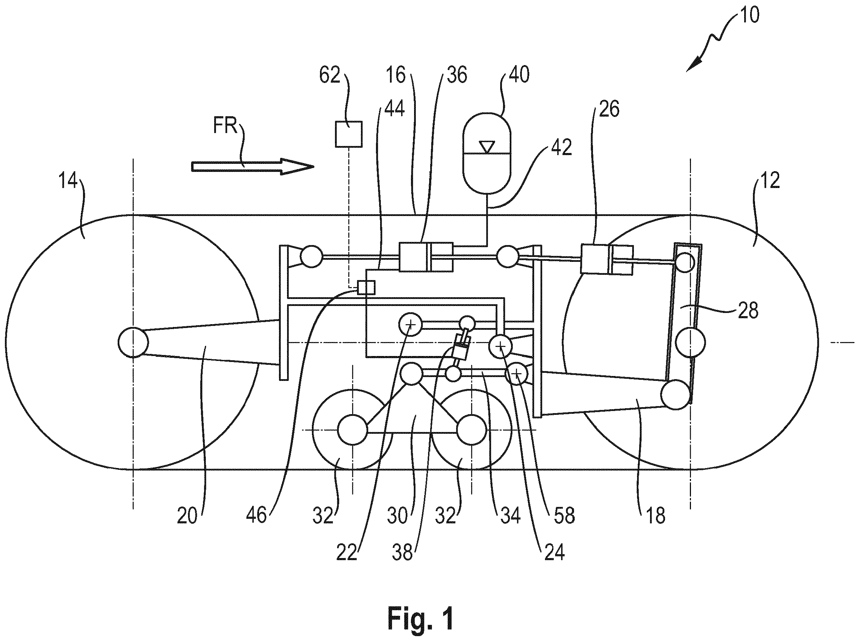

In Fig. 1 ist ein Raupenlaufwerk 10 einer landwirtschaftlichen Arbeitsmaschine wie einem Traktor oder einer selbstfahrenden Erntemaschine (nicht gezeigt) dargestellt. Auf den Aufbau eines Traktors oder einer selbstfahrenden Erntemaschine soll nicht detailliert eingegangen werden, da dieser als dem Fachmann bekannt angesehen wird. Eine Arbeitsmaschine im Sinne der Erfindung kann auch eine Baumaschine mit Raupenlaufwerken 10 sein.

Das Raupenlaufwerk 10 weist eine erste Umlenkrolle 12 und eine zweite Umlenkrolle 14 auf, um welche zur Abstützung der landwirtschaftlichen Arbeitsmaschine gegenüber dem Boden ein elastisches Raupenband 16, beispielsweise aus Gummi, auf, welches endlos umläuft. Das Raupenband 16 wird dabei beispielsweise durch die zweite Umlenkrolle 14 angetrieben. Der Antrieb des Raupenbandes 16 erfolgt dabei durch eine kraftschlüssige, insbesondere reibkraftschlüssige, Verbindung radial außenseitig zwischen der Umlenkrolle 14 und einer Innenfläche des Raupenbandes 16. Zur seitlichen Führung weist das Raupenband 16 innenseitig angeordnete Führungsblöcke (nicht dargestellt) auf, welche im Wesentlichen mittig des Raupenbandes 16 angeordnet sein können und mit entsprechenden Innenflächen der Umlenkrollen 12, 14 zusammenwirkenden.

Die erste Umlenkrolle 12, welche in Fahrtrichtung vorne liegt, ist an einem ersten Tragarm 18 drehbar gelagert, wobei der erste Tragarm 18 um einer Maschinenachse 22 gegenüber der Arbeitsmaschine schwenkbar an dieser abgestützt ist. Die zweite Umlenkrolle 14 ist an einem zweiten Tragarm 20 drehbar gelagert, wobei der zweite Tragarm 20 um eine erste Schwenkachse 24 schwenkbar an dem ersten Tragarm 18 gelagert ist. An dem ersten Tragarm 18 ist eine Spannvorrichtung 26 in Form eines Hydraulikzylinders angeordnet, welche auf eine ebenfalls an dem ersten Tragarm 18 angeordnete Bandspannschwinge 28 eine Spannkraft zur Spannung des Raupenbandes 16 aufbringen kann. Zwischen den Umlenkrollen 12, 14 sind zur besseren Abstützung der Arbeitsmaschine gegenüber dem Boden an einem Pendel 30 drehbar zwei Stützrollen 32 angeordnet. Das Pendel 30 mit den Stützrollen 32 ist über eine Schwinge 34 an dem ersten Tragarm 18 gelagert und um eine zweite Schwenkachse 58 gegenüber dem ersten Tragarm 18 verschwenkbar. Die Stützrollen 32 liegen dabei innenseitig an dem Raupenband 16 an.

Ein erstes Dämpfungselement 36 ist zwischen dem ersten und zweiten Tragarm 18, 20 angeordnet und mit endseitig jeweils diesen verbunden. Das erste Dämpfungselement 36 ermöglicht dabei eine Dämpfung einer nach oben gerichteten Schwenkbewegung um die Maschinenachse 22 des in Fahrtrichtung FR vorne liegenden ersten Tragarmes 18, beispielsweise bei einem Überfahren einer Bodenunebenheit. Eine Dämpfung der Bewegung der an dem Pendel 30 gelagerten Stützrollen 32 erfolgt über ein zweites Dämpfungselement 38. Das zweite Dämpfungselement 38 ist dabei zwischen dem ersten Tragarm 20 und der Schwinge 34 angeordnet und jeweils endseitig mit diesen verbunden. Die Dämpfungselemente 36, 38 können dabei in Form von Hydraulik und/oder hydropneumatischen Zylindern ausgebildet sein. Durch das zweite Dämpfungselement 38 kann eine Schwenkbewegung der Schwinge 34, an der endseitig das Pendel 30 mit den Stützrollen 32 gelagert ist, um die zweite Schwenkachse 58 gegenüber dem ersten Tragarm 20 abgestützt und gedämpft werden. Das erste und zweite Dämpfungselement 36, 38 sind dabei über eine Verbindungsleitung 44 fluidisch gekoppelt. Dabei kann beispielsweise bei einer Auslenkung des ersten Tragarms 20 nach oben Fluid von dem ersten Dämpfungselement 36 über die Verbindungsleitung 44 zu dem zweiten Dämpfungselement 38 gelangen, so dass hier der Fluiddruck steigt und eine Abstützung der Stützrollen 32 gegenüber dem Boden erhöht wird. Das erste Dämpfungselement 36 ist über eine Zuleitung 42 mit einem Druckspeicher 40 verbunden, der beispielsweise in Form eines Membranspeichers ausgebildet sein kann.

Gemäß der Erfindung ist eine geregelte Drosseleinrichtung 46 vorgesehen, welche zwischen dem ersten und zweiten Dämpfungselement 36, 38 angeordnet ist. die Drosseleinrichtung 46 ist dabei derart ausgebildet ist, dass deren Strömungswiderstand, insbesondere während des Betriebs des Raupenlaufwerkes 10, einstellbar ist. Die Drosseleinrichtung 46 kann insbesondere dem zweiten Dämpfungselement 38 zugeordnet sein und dessen Dämpfungsverhalten einstellbar regeln, wobei die Drosseleinrichtung 46 beispielsweise in der Verbindungsleitung 44 angeordnet sein kann. Die geregelte Drosseleinrichtung 46 ist über eine Steuervorrichtung 62 steuer- und regelbar, wobei die Steuervorrichtung 62 arbeitsmaschinenseitig angeordnet, oder in eine arbeitsmaschinenseitige Steuereinrichtung (nicht dargestellt) integriert sein kann.

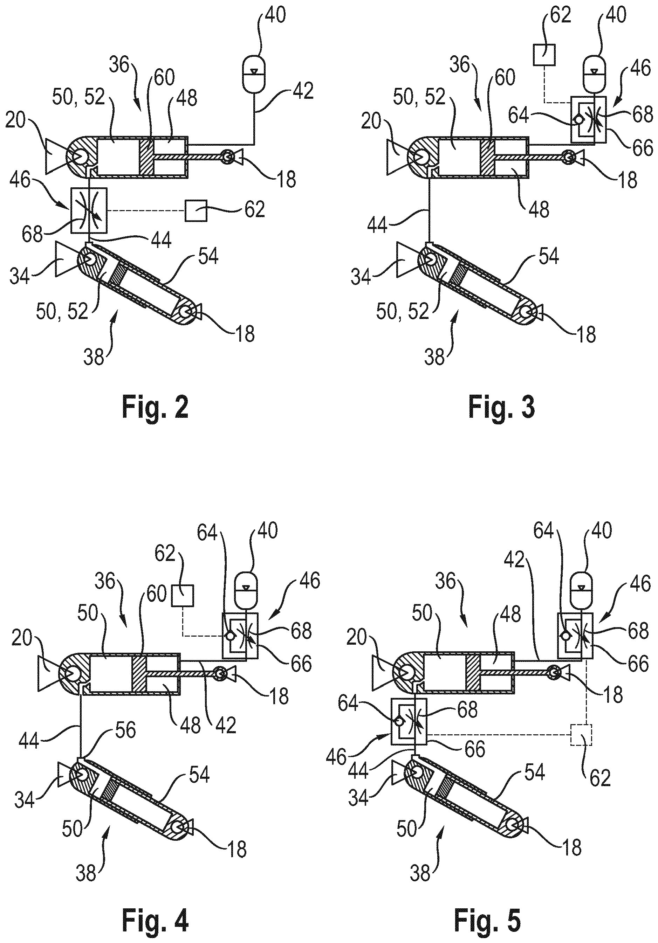

In Fig. 2 ist eine detaillierte Darstellung der Anordnung des ersten und zweiten Dämpfungselementes 36, 38 mit der geregelten Drosseleinrichtung 46, welche in der Verbindungsleitung 44 angeordnet ist, dargestellt. Das erste Dämpfungselement 36 ist endseitig sowohl mit dem ersten Tragarm 18 und dem zweiten Tragarm 20 verbunden, wohingegen das zweite Dämpfungselement 38 endseitig mit dem ersten Tragarm 18 und der Schwinge 34 der Stützrollen verbunden ist. Das erste Dämpfungselement 36 ist über die Zuleitung 42 fluidisch mit dem Druckspeicher 40 verbunden, wobei die Zuleitung 42 mit einer Ringkammer 48 des ersten Dämpfungselementes 36 verbunden ist. Das erste Dämpfungselement 36 weist zudem einen Kolbenraum 50 auf, welcher durch einen beweglichen Kolben 60 von der Ringkammer 48 getrennt ist. In dem Druckspeicher 40, dem Kolbenraum 50 ist ein erstes Fluid 52, welches über die Verbindungsleitung 44 auch in einen Kolbenraum 50 des zweiten Dämpfungselementes 38 gelangt. Das zweite Dämpfungselement 38 ist in Form eines hydropneumatischen Dämpfers ausgebildet und weist in ein geschlossenes Volumen eines komprimierbaren zweiten Fluides 54 auf. Die geregelte Drosseleinrichtung 46 ist in Form eines Drosselventils 68 ausgebildet und ist über eine Steuervorrichtung 62 auch während des Betriebs der Arbeitsmaschine bzw. des Raupenlaufwerkes 10 einstellbar und/oder regelbar.

In einer alternativen Ausgestaltung (Fig. 3) ist eine dem ersten Dämpfungselement 36 zugeordnete geregelte Drosseleinrichtung 46 zwischen dem Druckspeicher 40 und der Ringkammer 48 des ersten Dämpfungselementes 36 in der Zuleitung 42 angeordnet. Die geregelte Drosseleinrichtung 46 weist dabei neben einem Drosselventil 68 ein parallel zu diesem angeordnetes Rückschlagventil 64 auf. Die geregelte Drosseleinrichtung 46 ist dabei zu einem geregelten Drosselrückschlagventil 66 verschaltet, welches richtungsabhängig unterschiedliche Strömungswiderstände und damit unterschiedliche Dämpfungen aufweist. Dies ermöglicht beispielsweise eine gedämpfte Ausweichbewegung des ersten Tragarms 20 und über das Rückschlagventil 64 eine im wesentlichen ungedämpfte, schnellere Rückstellbewegung. Dies hat den Vorteil, dass die Umlenkrollen 12, 14 und Stützrollen 32 einer Bodenkontur besser folgen können, wodurch ein Fahrverhalten der Arbeitsmaschine verbessert werden kann.

Die in Fig. 4 dargestellte Anordnung des ersten und zweiten Dämpfungselementes 36, 38 weist zusätzlich zu der geregelten Drosseleinrichtung 46 in der Zuleitung 42 einen richtungsabhängigen Strömungswiderstand 56 zwischen dem ersten und zweiten Dämpfungselement 36, 38 auf. Der richtungsabhängige Strömungswiderstand 56 ist in das zweite Dämpfungselement 38 kolbenraumseitig integriert und ermöglicht eine richtungsabhängige Dämpfung. Der richtungsabhängige Strömungswiderstand 56 kann dabei geregelt oder, beispielsweise mit je Richtung definierten Strömungswiderständen, voreingestellt sein. In Fig. 5 ist im Vergleich zu Fig. 3 zwischen den beiden Dämpfungselementen 36, 38 eine weitere Drosseleinrichtung 46 in Form eines Drosselrückschlagventils 66 mit parallelgeschaltetem Rückschlagventil 64 und Drosselventil 68 angeordnet.

Die geregelten Drosseleinrichtungen 46 und/oder richtungsabhängigen Strömungswiderstände 56 können auch in ein oder mehrere Dämpfungselemente 36, 38 integriert sein, beispielsweise in Form von Dämpfungskolben und/oder plattenförmigen Rückschlagventilen, sogenannten Shimes.

### Bezugszeichenliste

- 10: Raupenlaufwerk
- 12: erste Umlenkrolle
- 14: zweite Umlenkrolle
- 16: Raupenband
- 18: erster Tragarm
- 20: zweiter Tragarm
- 22: Maschinenachse
- 24: erste Schwenkachse
- 26: Spannvorrichtung
- 28: Bandspannschwinge
- 30: Pendel
- 32: Stützrolle
- 34: Schwinge
- 36: erstes Dämpfungselement
- 38: zweites Dämpfungselement
- 40: Druckspeicher
- 42: Zuleitung
- 44: Verbindungsleitung
- 46: geregelte Drosseleinrichtung
- 48: Ringkammer
- 50: Kolbenraum
- 52: erstes Fluid
- 54: zweites Fluid
- 56: Strömungswiderstand
- 58: zweite Schwenkachse
- 60: Kolben
- 62: Steuervorrichtung
- 64: Rückschlagventil
- 66: Drosselrückschlagventil
- 68: Drosselventil

- FR: Fahrtrichtung

## Patentansprüche

1. Raupenlaufwerk für eine landwirtschaftliche Arbeitsmaschine mit mindestens einer ersten und einer zweiten Umlenkrolle (12, 14), wobei die erste Umlenkrolle (12) an einem ersten Tragarm (18) und die zweite Umlenkrolle (14) an einem zweiten Tragarm (20) gelagert ist, mindestens eine zwischen den Umlenkrollen (12, 14) angeordnete Stützrolle (32), und ein die Umlenkrollen (12, 14) und die mindestens eine Stützrolle (32) umschlingendes Raupenband (16), wobei mindestens einer Umlenkrolle (12, 14) und/oder einer Stützrolle (32) ein, insbesondere hydro-pneumatisches, Dämpfungselement (36, 38) zugeordnet ist,
**dadurch gekennzeichnet, dass**
mindestens eine, einem Dämpfungselement (36, 38) zugeordnete, geregelte Drosseleinrichtung (46) vorgesehen ist, welche derart ausgebildet ist, dass deren Strömungswiderstand, insbesondere während des Betriebs des Raupenlaufwerkes (10), einstellbar ist, wobei der Drosseleinrichtung (46) mindestens ein Rückschlagventil (64) zugeordnet ist, wobei ein, insbesondere voreingestellter, richtungsabhängiger Strömungswiderstand (56) vorgesehen ist.

2. Raupenlaufwerk nach Anspruch 1, **dadurch gekennzeichnet, dass** mindestens einer Umlenkrolle (12, 14) ein erstes Dämpfungselement (36) und der mindestens einen Stützrolle (32) ein zweites Dämpfungselement (38) zugeordnet ist, wobei das erste und zweite Dämpfungselement (36, 38) fluidisch gekoppelt sind.

3. Raupenlaufwerk nach Anspruch 1 oder 2, **dadurch gekennzeichnet, dass** ein Druckspeicher (40) für ein erstes Fluid (52) vorgesehen ist, welcher mit mindestens einem Dämpfungselement (36, 38) fluidisch verbunden ist.

4. Raupenlaufwerk nach einem der vorherigen Ansprüche, **dadurch gekennzeichnet, dass** die geregelte Drosseleinrichtung (46) zwischen dem ersten und dem zweiten Dämpfungselement (36, 38), insbesondere in einer diese verbindende Verbindungsleitung (44), angeordnet ist

5. Raupenlaufwerk nach einem der vorherigen Ansprüche, **dadurch gekennzeichnet, dass** die geregelte Drosseleinrichtung (46) zwischen einem, insbesondere dem ersten, Dämpfungselement (36, 38) und dem Druckspeicher (40) angeordnet ist.

6. Raupenlaufwerk nach einem der vorherigen Ansprüche, **dadurch gekennzeichnet, dass** einem Dämpfungselement (36, 38) mindestens ein Rückschlagventil (64) zugeordnet ist.

7. Raupenlaufwerk nach einem der vorherigen Ansprüche, **dadurch gekennzeichnet, dass** die geregelte Drosseleinrichtung (46) in Form einer verstellbaren Blende und/oder eines Drosselventils (68) mit einstellbarem Strömungsquerschnitt ausgestaltet ist.

8. Raupenlaufwerk nach einem der vorherigen Ansprüche, **dadurch gekennzeichnet, dass** eine Drosseleinrichtung (46), ein, insbesondere voreingestellter, richtungsabhängiger Strömungswiderstand (56) und/oder ein Rückschlagventil (64) in ein Dämpfungselement (36, 38), insbesondere dessen Kolben (60), integriert ist.

9. Raupenlaufwerk nach einem der vorherigen Ansprüche, **dadurch gekennzeichnet, dass** eine Steuervorrichtung (62) zum manuellen und/oder automatischen Einstellen mindestens einer geregelten Drosseleinrichtung (46), insbesondere während des Betriebs des Raupenlaufwerkes (10), vorgesehen ist.

10. Raupenlaufwerk nach einem der vorherigen Ansprüche, **dadurch gekennzeichnet, dass** eine geregelte Drosseleinrichtung (46) in Abhängigkeit mindestens eines Betriebsparameters steuer- und/oder regelbar ist.

11. Landwirtschaftliche Arbeitsmaschine, insbesondere ein Traktor oder eine selbstfahrende Erntemaschine, mit mindestens einem Raupenlaufwerk (10) nach einem der Ansprüche 1 bis 10.

## Claims

1. A track roller unit for an agricultural working machine, with least a first and a second guide roller (12, 14), wherein the first guide roller (12) is mounted on a first supporting arm (18) and the second guide roller (14) is mounted on a second supporting arm (20), at least one support roller (32) disposed between the guide rollers (12, 14), and a track belt (16) wrapped around the guide rollers (12, 14) and the at least one support roller (32), wherein a damping element (36, 38), which in particular is hydropneumatic, is associated with at least one guide roller (12, 14) and/or a support roller (32),
**characterized in that**
at least one regulated flow control device (46) which is associated with a damping element (36, 38) is provided and is configured in a manner such that its flow resistance can be adjusted, in particular during the operation of the track roller unit (10), wherein at least one non-return valve (64) is associated with the flow control device (46), wherein a directional flow resistance (56), which in particular is pre-set, is provided.

2. The track roller unit according to claim 1, **characterized in that** a first damping element (36) is associated with at least one guide roller (12, 14) and a second damping element (38) is associated with the at least one support roller (32), wherein the first and second damping elements (36, 38) are fluidically coupled.

3. The track roller unit according to claim 1 or claim 2, **characterized in that** a pressure accumulator (40) is provided for a first fluid (52), the pressure accumulator being fluidically connected to at least one damping element (36, 38).

4. The track roller unit according to one of the preceding claims, **characterized in that** the regulated flow control device (46) is disposed between the first and the second damping element (36, 38), in particular in a connecting line (44) which connects them.

5. The track roller unit according to one of the preceding claims, **characterized in that** the regulated flow control device (46) is disposed between a damping element (36, 38), in particular the first damping element, and the pressure accumulator (40).

6. The track roller unit according to one of the preceding claims, **characterized in that** at least one non-return valve (64) is associated with a damping element (36, 38).

7. The track roller unit according to one of the preceding claims, **characterized in that** the regulated flow control device (46) is configured in the form of an adjustable orifice plate and/or a restrictor valve (68) with an adjustable cross section of flow.

8. The track roller unit according to one of the preceding claims, **characterized in that** a flow control device (46), a directional flow resistance (56), in particular pre-set, and/or a non-return valve (64) is integrated into a damping element (36, 38), in particular the piston (60) thereof.

9. The track roller unit according to one of the preceding claims, **characterized in that** a control device (62) is provided which is configured for the manual and/or automatic adjustment of at least one regulated flow control device (46), in particular during the operation of the track roller unit (10).

10. The track roller unit according to one of the preceding claims, **characterized in that** a regulated flow control device (46) can be controlled and/or regulated as a function of at least one operational parameter.

11. An agricultural working machine, in particular a tractor or a self-propelled harvesting machine, with at least one track roller unit (10) according to one of claims 1 to 10.

## Revendications

1. Train de roulement à chenilles pour une machine de travail agricole comprenant au moins un premier et un deuxième galet de renvoi (12, 14), le premier galet de renvoi (12) étant monté sur un premier bras porteur (18) et le deuxième galet de renvoi (14) étant monté sur un deuxième bras porteur (20), au moins un galet de support (32) disposé entre les galets de renvoi (12, 14) et une bande de chenille (16) entourant les galets de renvoi (12, 14) et le au moins un galet de support (32), à au moins un galet de renvoi (12, 14) et/ou un galet de support (32) étant associé un élément amortisseur (36, 38), en particulier hydropneumatique,
**caractérisé en ce que**
il est prévu au moins un équipement de restriction régulé (46) qui est associé à un élément amortisseur (36, 38) et qui est conçu de façon que sa résistance à l'écoulement soit régulable, en particulier pendant le fonctionnement du train de roulement à chenilles (10), à l'équipement de restriction (46) étant associée au moins une valve antiretour (64), une résistance à l'écoulement directionnelle (56), en particulier préréglée, étant prévue.

2. Train de roulement à chenilles selon la revendication 1, **caractérisé en ce qu'**à au moins un galet de renvoi (12, 14) est associé un premier élément amortisseur (36) et au au moins un galet de support (32) est associé un deuxième élément amortisseur (38), le premier et le deuxième élément d'amortissement (36, 38) étant couplés fluidiquement.

3. Train de roulement à chenilles selon la revendication 1 ou 2, **caractérisé en ce qu'**il est prévu un accumulateur de pression (40) pour un premier fluide (52), lequel est relié fluidiquement à au moins un élément amortisseur (36, 38).

4. Train de roulement à chenilles selon une des revendications précédentes, **caractérisé en ce que** l'équipement de restriction régulé (46) est disposé entre le premier et le deuxième élément amortisseur (36, 38), en particulier sur une conduite de liaison (44) reliant ceux-ci.

5. Train de roulement à chenilles selon une des revendications précédentes, **caractérisé en ce que** l'équipement de restriction régulé (46) est disposé entre un élément d'amortissement (36, 38), en particulier le premier, et l'accumulateur de pression (40).

6. Train de roulement à chenilles selon une des revendications précédentes, **caractérisé en ce qu'**à un élément amortisseur (36, 38) est associée au moins une valve antiretour (64).

7. Train de roulement à chenilles selon une des revendications précédentes, **caractérisé en ce que** l'équipement de restriction régulé (46) est conçu en forme d'étrangleur réglable et/ou de soupape d'étranglement (68) avec une section d'écoulement réglable.

8. Train de roulement à chenilles selon une des revendications précédentes, **caractérisé en ce qu'**un équipement de restriction (46), une résistance à l'écoulement directionnelle, en particulier préréglée, (56) et/ou une valve antiretour (64) est intégré dans un élément amortisseur (36, 38), en particulier dans son piston (60).

9. Train de roulement à chenilles selon une des revendications précédentes, **caractérisé en ce qu'**un dispositif de commande (62) est prévu pour le réglage manuel et/ou automatique au moins d'un équipement de restriction régulé (46), en particulier pendant le fonctionnement du train de roulement à chenilles (10).

10. Train de roulement à chenilles selon une des revendications précédentes, **caractérisé en ce qu'**un équipement de restriction régulé (46) est commandable et/ou régulable en fonction d'au moins un paramètre de fonctionnement.

11. Machine de travail agricole, en particulier un tracteur ou une machine de récolte automotrice, comprenant au moins un train de roulement à chenilles (10) selon une des revendications 1 à 10.
